# EUROPÄISCHE PATENTSCHRIFT

(11) **EP 2 398 574 B1**
(45) Veröffentlichungstag und Bekanntmachung des Hinweises auf die Patenterteilung: **18.06.2014**
(21) Anmeldenummer: 10702640.3
(22) Anmeldetag: 18.01.2010
(51) Int. Cl.: B01D 53/047

(54) **VERFAHREN UND VORRICHTUNG ZUM ABSCHEIDEN EINES GASFÖRMIGEN BESTANDTEILS**
METHOD AND APPARATUS FOR SEPARATING A GASEOUS COMPONENT
PROCÉDÉ ET DISPOSITIF DE SÉPARATION D'UN CONSTITUANT GAZEUX

(30) Priorität: 20.02.2009 AT 2822009
(43) Veröffentlichungstag der Anmeldung: 28.12.2011
(73) Patentinhaber: Siemens VAI Metals Technologies GmbH, 4031 Linz (AT)
(72) Erfinder: MILLNER, Robert, A-3382 Loosdorf (AT); REIN, Norbert, A-1060 Wien (AT); ROSENFELLNER, Gerald, A-3352 Ertl (AT)
(74) Vertreter: Maier, Daniel Oliver
(86) Internationale Anmeldenummer: PCT/EP2010/050511
(87) Internationale Veröffentlichungsnummer: WO 2010/094527

(56) Entgegenhaltungen:
- EP-A1- 1 101 731
- EP-A2- 0 864 350
- EP-A2- 1 142 623
- WO-A1-97/33003
- DE-A1-102008 012 735
- GB-A- 1 599 163

## Beschreibung

Die vorliegende Erfindung betrifft ein Verfahren und eine Vorrichtung zum Abscheiden mindestens eines gasförmigen Bestandteils aus einem Abgas einer Anlage zur Herstellung von flüssigem Roheisen, flüssigen Stahl-Vorprodukten oder Eisenschwamm.

Konkret betrifft die Erfindung ein Verfahren zum Abscheiden mindestens eines gasförmigen Bestandteils aus einem Abgas einer Anlage zur Herstellung von flüssigem Roheisen, flüssigen Stahl-Vorprodukten oder Eisenschwamm, wobei in einem ersten Schritt ein Strom des Abgases unter einem ersten Druck mindestens einen Adsorptionsabscheider durchläuft, wodurch der gasförmige Bestandteil aus dem Abgas überwiegend abgeschieden wird und in einem zweiten Schritt der gasförmige Bestandteil unter einem zweiten Druck, der niedriger ist als der erste Druck, aus dem Adsorptionsabscheider überwiegend entfernt wird.

Eine Vorrichtung zur Umsetzung dieses Verfahrens weist wenigstens einen Adsorptionsabscheider und zumindest eine Einrichtung zur Erzeugung eines Desorptionsdrucks auf.

Aus der AT 41796 A ist eine Vorrichtung zum Abscheiden von Kohlendioxid aus einem Abgas einer Anlage zur Herstellung von Eisenschwamm bekannt, die einen Adsorptionsabscheider und eine Einrichtung zur Erzeugung eines Desorptionsdrucks aufweist, wobei die Einrichtung zur Erzeugung des Desorptionsdrucks als Kompressor ausgeführt ist.

Die Verwendung eines Kompressors zur Erzeugung eines möglichst niedrigen Desorptionsdrucks ist nicht vorteilhaft, weil der Kompressor nicht wartungsfrei ist, hohe Investitions- und Energiekosten verursacht, einen hohen Platzbedarf aufweist und außerdem eine hohe Lärmbelastung verursacht.

Aufgabe der Erfindung ist es, ein Verfahren und eine Vorrichtung zum Abscheiden mindestens eines gasförmigen Bestandteils aus einem Abgas einer Anlage zur Herstellung von flüssigem Roheisen, flüssigen Stahl-Vorprodukten oder Eisenschwamm, zu schaffen, welche wartungsfrei ist, geringere Investitions- und Energiekosten verursacht und einen geringeren Platzbedarf aufweist.

Diese Aufgabe wird durch ein Verfahren gelöst, bei dem der zweite Druck bzw. der Desorptionsdruck, durch zumindest eine Strahlpumpe erzeugt wird, der ein Strom eines Treibgases unter einem dritten Druck, der höher ist als der zweite Druck, zugeführt wird.

Beim Abscheiden mindestens eines gasförmigen Bestandteils, z.B. Kohlendioxid (CO₂) und/oder Wasserdampf (H₂O), aus einem Abgas einer Anlage zur Herstellung von flüssigem Roheisen, flüssigen Stahl-Vorprodukten oder Eisenschwamm, werden nach dem Stand der Technik unter anderem Druckwechsel-Adsorptionsanlagen (engl. PSA *Pressure Swing Adsorption* oder VPSA Vacuum *Pressure Swing Adsorption)* eingesetzt. Das Abgas setzt sich aus Topgas, Offgas, Überschussgas oder einer beliebigen Mischung dieser Gase zusammen. Als Topgas wird das ausgenutzte Reduktionsgas aus einem Hochofen oder einem Reduktionsschacht bezeichnet. Als Offgas wird das ausgenutzte Reduktionsgas aus einem oder mehreren Wirbelschichtreaktoren bezeichnet. Als Überschussgas wird das zu einer Regelung erforderliche Regelgas aus einem Einschmelzvergaser bezeichnet. In einem ersten Schritt, der sog. Adsorptionsphase, durchläuft das Abgas unter einem ersten Druck p₁, dem sog. Adsorptionsdruck, mindestens einen Adsorptionsabscheider, wodurch der gasförmige Bestandteil aus dem Abgas größtenteils abgeschieden wird. Dabei funktioniert die Abscheidung umso besser, je höher der erste Druck eingestellt werden kann. Da das Aufnahmevermögen der im Adsorptionsabscheider enthaltenen Adsorptionsmittel begrenzt ist, ist es notwendig, den gasförmigen Bestandteil in einem zweiten Schritt, der sog. Desorptionsphase, unter einem zweiten Druck p₂, dem sog. Desorptionsdruck, der niedriger ist als der erste Druck, aus dem Adsorptionsabscheider zu entfernen. Das Entfernen des gasförmigen Bestandteils aus dem Adsorptionsabscheider funktioniert umso besser, je niedriger der zweite Druck eingestellt werden kann. Nach dem erfindungsgemäßen Verfahren wird der zweite Druck durch zumindest eine Strahlpumpe erzeugt, wobei einem Treibgasanschluss der Strahlpumpe ein Strom eines Treibgases unter einem dritten Druck p₃, der höher ist als der zweite Druck, zugeführt wird. Ein Sauganschluss der Strahlpumpe ist mittels einer Verbindungsleitung mit einem Desorptionsanschluss des Adsorptionsabscheiders verbunden; das Gas, das in einer Desorptionsphase aus einem oder mehreren Adsorptionsabscheider entfernt wird, wird als Tailgas bezeichnet. Dem Fachmann sind Strahlpumpen, oftmals auch als Ejektoren, Injektoren oder Venturi-Düsen bezeichnet, bekannt (vgl. z.B. http://de.wikipedia.org/wiki/Strahlpumpe). Die Verwendung einer Strahlpumpe gegenüber einem Kompressor zur Erzeugung des Desorptionsdrucks hat folgende Vorteile: geringere Anschaffungs- und Energiekosten, geringerer Platzbedarf und Wartungsfreiheit der Strahlpumpe.

Eine Ausführungsform besteht darin, als Treibgas für die Strahlpumpe entweder ein Topgas, ein Offgas, ein Überschussgas oder eine Mischung aus mindestens zwei dieser Gase zu verwenden. Da diese Gase typischerweise ein Druckniveau von 0.5 bis 5 bar aufweisen und dieser Druck nach dem Stand der Technik ohnehin gedrosselt werden muss, ist es vorteilhaft, die im Treibgas vorhandene Druckenergie zur Erzeugung des Desorptionsdrucks zu verwenden, wodurch sich - im Vergleich zu PSA Anlagen mit Kompressoren - wesentlich niedrigere Betriebs- und Investitionskosten ergeben.

In einer Ausführungsform wird als Abgas entweder ein Topgas, ein Offgas, ein Überschussgas oder eine Mischung aus mindestens zwei dieser Gase verwendet. Es ist vorteilhaft, aus dem Abgas entweder Kohlendioxid (CO₂) und/oder Wasserdampf (H₂O) abzuscheiden, wodurch entweder das Reduktionspotential und/oder der Brennwert des Abgases erhöht wird. Bei Direktreduktionsanlagen ist die Erhöhung des Reduktionspotentials des Abgases, bei Hochöfen ist ebenfalls die Erhöhung des Reduktionspotentials sowie die Erhöhung des Brennwerts des Abgases relevant.

Zur Abscheidung von Kohlendioxid und/oder Wasserdampf ist es vorteilhaft, im Adsorptionsbehälter ein Adsorptionsmittel aus Zeolith, aktiviertem Siliziumoxid, Silica Gel, aktiviertem Aluminiumoxid, Aktivkohle oder einer Mischung aus mindestens zwei dieser Stoffe zu verwenden.

Die im Treibgas vorhandene Druckenergie kann direkt zur Desorption des Adsorptionsabscheiders verwendet werden, wenn das Treibgas unter einem Druck von 0.5 bis 5 bar über Umgebungsdruck der Strahlpumpe zugeführt wird. Dadurch ist keine Anpassung des Druckniveaus vom Treibgas (p₃) auf den Desorptionsdruck (p₂) erforderlich; die Einstellung des Desorptionsdrucks erfolgt entweder über die Durchflussmenge des Treibgases, über das Flächenverhältnis der Strahlpumpe oder über die Auslegung und Anordnung eines oder mehrerer (z.B. serieller) Strahlpumpen.

Ein besonders niedriger Desorptionsdruck und damit eine besonders gründliche Desorption des Adsorptionsabscheiders und somit niedrige Restbeladung von zu entfernenden Gaskomponenten (z.B. CO₂ und/oder H₂O) lässt sich erreichen, wenn das Treibgas mehreren, in einer Serienschaltung angeordneten, Strahlpumpen zugeführt wird, wodurch der gasförmige Bestandteil unter einem reduzierten zweiten Druck aus dem Adsorptionsabscheider entfernt wird.

In einer weiteren Variante ist es möglich, das Treibgas mehreren, in einer Parallelschaltung angeordneten, Strahlpumpen zuzuführen, wodurch der gasförmige Bestandteil unter einem reduzierten zweiten Druck aus dem Adsorptionsabscheider entfernt wird. Durch diese Anordnung von Strahlpumpen ist es möglich, mehrere kleinere Strahlpumpen anstelle einer größeren Strahlpumpe zu verwenden.

Für den Betrieb der Druckwechsel-Adsorptionsanlage ist es vorteilhaft, den Adsorptionsabscheider in einer Adsorptionsphase mit dem ersten Druck zu beaufschlagen, den Druck im Adsorptionsabscheider in einer ersten Übergangsphase mit einem oder mehreren Zwischendrücken vom ersten auf den zweiten Druck oder einen Druck, welcher etwas über dem zweiten Druck liegt, abzusenken, den Adsorptionsabscheider in einer Desorptionsphase mit dem zweiten Druck zu beaufschlagen und anschließend den Druck in einer zweiten Übergangsphase im Adsorptionsabscheider mit einem oder mehreren Zwischendrücken vom zweiten auf den ersten Druck zu erhöhen. Dadurch werden schnelle Druckwechsel vermieden, was sich positiv auf die Abscheideeffizienz auswirkt, da weniger Gaskomponenten bestehend aus Kohlenmonoxid (CO) und Wasserstoff (H₂) in das Tailgas verloren gehen und weiters die Druckbelastung des Adsorptionsabscheiders sowie die Druckwechselbeanspruchung der Verteilerböden und eine Lärmentstehung reduziert werden.

Besonders günstig ist es, den Desorptionsdruck im Adsorptionsabscheider kontinuierlich zu verändern. Alternativ kann der Druck auch diskret, dh. stufig, z.B. durch Regelung der Treibgasversorgung von Strahlpumpen, verändert werden.

Der Druck lässt sich besonders genau einstellen, wenn der zweite Druck bzw. der Desorptionsdruck mittels einer Messeinrichtung erfasst und einem Regler zugeführt wird, der Regler unter Zuhilfenahme eines Regelgesetzes und unter Berücksichtigung eines Sollwertes eine Stellgröße ermittelt und einem Regelorgan zuführt, wobei der Strom des Treibgases zur Strahlpumpe derart verändert wird, dass der Druck dem Sollwert für den Desorptionsdruck möglichst entspricht.

Um eine möglichst unmittelbare Umsetzung des erfindungsgemäßen Verfahrens zu ermöglichen, welche die der Erfindung zugrunde liegende Aufgabe löst, ist vorgesehen dass die Einrichtung zur Erzeugung eines Desorptionsdrucks als eine Strahlpumpe mit einer Verbindungsleitung zwischen einem Desorptionsanschluss des Adsorptionsabscheiders und einem Sauganschluss der Strahlpumpe ausgeführt ist.

In einer Ausführungsform, ist ein Treibgasanschluss der Strahlpumpe mit einer Leitung für ein Topgas, ein Offgas, ein Überschussgas oder einer Mischung aus mindestens zwei dieser Gase der Anlage zur Herstellung von flüssigem Roheisen, flüssigem Stahl-Vorprodukten oder Eisenschwamm verbunden.

Ein besonders niedriger Desorptionsdruck und damit eine besonders gründliche Desorption des Adsorptionsabscheiders lässt sich erreichen, wenn mehrere Strahlpumpen in einer Serienschaltung angeordnet sind, ein Sauganschluss einer ersten Strahlpumpe mit dem Desorptionsanschluss des Adsorptionsabscheiders verbunden ist, jeweils ein Druckanschluss einer vorgeordneten Strahlpumpe mit einem Sauganschluss einer nachgeordneten Strahlpumpe verbunden ist und alle Treibgasanschlüsse mit einer Leitung für ein Topgas, ein Offgas, ein Überschussgas oder einer Mischung aus mindestens zwei dieser Gase der Anlage zur Herstellung von flüssigem Roheisen, flüssigem Stahl-Vorprodukten oder Eisenschwamm verbunden sind.

Eine weitere Ausführungsvariante besteht darin, mehrere Strahlpumpen in einer Parallelschaltung anzuordnen, alle Sauganschlüsse mit dem Desorptionsanschluss des Adsorptionsabscheiders und alle Treibgasanschlüsse mit einer Leitung für ein Topgas, ein Offgas, ein Überschussgas oder einer Mischung aus mindestens zwei dieser Gase der Anlage zur Herstellung von flüssigem Roheisen, flüssigem Stahl-Vorprodukten oder Eisenschwamm zu verbinden.

Natürlich ist es ebenfalls möglich, dass die Vorrichtung eine Kombination von Serien- und Parallelschaltungen von Strahlpumpen aufweist. In einer möglichen Ausführungsform wird das Treibgas mehreren, in einer Serienschaltung angeordneten, Strahlpumpen zugeführt, wobei jedes Element der Serienschaltung aus mehreren, in einer Parallelschaltung angeordneten, Strahlpumpen besteht. In diesem Fall verteilt sich das, einem Element der Serienschaltung zugeführte, Treibgas auf die in einer Parallelschaltung angeordneten Strahlpumpen. Durch die Parallelschaltung mehrerer Strahlpumpen wird die Gesamtsaugleistung erhöht, wodurch es möglich wird, kleinere Strahlpumpen zu verwenden, ohne deren Größe an eine erforderliche Gesamtsaugleistung anpassen zu müssen (Skalierbarkeit). Durch die Serienschaltung mehrerer Strahlpumpen wird der erreichbare Gesamtdesorptionsdruck reduziert.

Um in einer Übergangsphase den Druck im Adsorptionsabscheider besonders genau einstellen zu können, ist vorgesehen, dass die Vorrichtung zusätzlich eine Messeinrichtung zur Erfassung eines Desorptionsdrucks, eine Regeleinrichtung und ein Regelorgan in einer Treibgasleitung der Strahlpumpe aufweist.

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
Fig. 1 eine schematische Darstellung einer Schmelzreduktions-Anlage auf Basis Feinerz mit einer Druckwechsel-Adsorptionsanlage zum Abscheiden von CO₂ und H₂O
Fig. 2 eine schematische Darstellung einer Druckwechsel-Adsorptionsanlage zum Abscheiden von CO₂ und H₂O
Fig. 3 eine schematische Darstellung eines Hochofens mit einer Druckwechsel-Adsorptionsanlage zum Abscheiden von CO₂ und H₂O
Fig. 4 zwei schematische Darstellungen von Strahlpumpen
Fig. 5 eine schematische Darstellung einer Serienschaltung von Strahlpumpen
Fig. 6 eine schematische Darstellung einer Parallelschaltung von Strahlpumpen

In den folgenden Figuren werden die Strömungsrichtungen durch Pfeile angegeben.

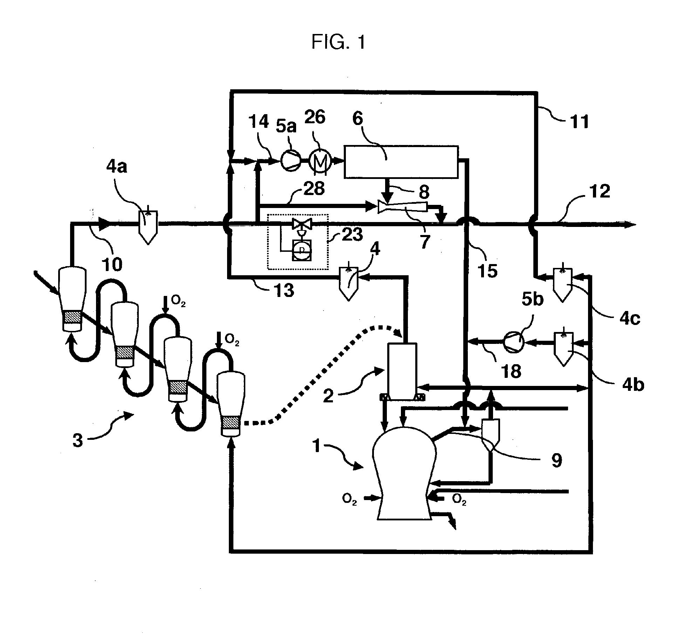

In Fig. 1 ist eine Schmelzreduktions-Anlage zur Erzeugung von flüssigem Roheisen auf Basis Feinerz gezeigt. Hierbei wird ein Feinerz gegebenenfalls mit Zuschlagsstoffen in einer Kaskade mehrerer Vorreduktionsreaktoren 3 (vier Wirbelschichtreaktoren dargestellt, optional sind auch 2 oder 3 möglich) vorreduziert und anschließend in einen Reduktionsreaktor 2 chargiert. Im Reduktionsreaktor 2 findet eine weitere Reduktion und eine Vorwärmung der chargierten Stoffe statt. Es ist jedoch auch möglich, auf die weitere Reduktion im Reduktionsreaktor 2 zu verzichten, wodurch der Gaswäscher 4 und die Leitung für ein Topgas 13 entfallen. Die Vorreduktion in den Vorreduktionsreaktoren 3 bzw. eine Reduktion im Reduktionsreaktor 2 erfolgt mittels eines, in einem Einschmelzvergaser 1 erzeugten Reduktionsgases 9, das nach einer Entstaubung in den Reduktionsreaktor 2 und nacheinander durch die einzelnen Vorreduktionsreaktoren 3 geleitet wird. Eine darüber hinausgehende Gasmenge wird entweder nach einer Gaswäsche in einem Gaswäscher 4b und einer Verdichtung mit einem Kompressor 5b als Kühlgas 18 mit einem gereinigten Abgas 15 vermischt, oder wiederum nach einer Gaswäsche in einem Gaswäscher 4c als Überschussgas 11 verwendet. Um die Energieeffizienz des Gesamtprozesses zu erhöhen, kann die Leitung für das Kühlgas 18 mit dem Gaswäscher 4b und dem Kompressor 5b entfallen. Ein Offgas 10 wird in dessen Strömungsrichtung aus dem letzten Vorreduktionsreaktor 3 abgezogen und in einem Gaswäscher 4a gereinigt. Das Abgas 14 der Schmelzreduktions-Anlage besteht aus einer ersten Teilmenge von Offgas 10, das vor einem Druckregler 23 abgezweigt wird, aus Topgas 13 und aus Überschussgas 11. Der Druckregler 23 hat die Aufgabe, den Druck des Offgases 10 konstant zu halten und den Vordruck für den Kompressor 5a und das Treibgas zu regeln; eine zweite Teilmenge des Offgases 10 wird einer Strahlpumpe 7 als Treibgas 28 zugeführt. Das Abgas 14 wird mittels eines Kompressors 5a verdichtet, mittels eines Gaskühlers 26 abgekühlt und unter einem ersten Druck p₁ mindestens einem Adsorptionsabscheider einer Druckwechsel-Adsorptionsanlage 6 zur Abscheidung von Kohlendioxid (CO₂) und/oder Wasserdampf (H₂O) zugeführt. Das durch die Abscheidung von CO₂ und/oder H₂O gereinigte Abgas 15 wird anschließend mit dem Reduktionsgas 9 vermischt und weiter im Prozess verwendet; dabei spielt es keine Rolle, ob das gereinigte Abgas 15 vor oder nach dem Heißgaszyklon zugegeben wird. In einer nicht dargestellten Ausführungsform, kann das gereinigte Abgas 15 bzw. eine Teilmenge davon, durch eine Heizeinrichtung erwärmt werden. Durch das Strömen des Treibgases durch die Strahlpumpe 7 unter einem dritten Druck p₃, wird ein zweiter Druck p₂ bzw. ein Desorptionsdruck erzeugt (p₂<p₃ und p₂<p₁), welcher zum Entfernen des abgeschiedenen Kohlendioxids und/oder des Wasserdampfs aus einem Adsorptionsabscheider der Druckwechsel-Adsorptionsanlage 6 verwendet wird. Hierzu ist ein Desorptionsanschluss des Adsorptionsabscheiders über eine Verbindungsleitung 8 für Tailgas mit einem Sauganschluss der Strahlpumpe verbunden. In einer nicht darstellten Ausführungsform, kann eine Leitung mit einem Absperrorgan zwischen der Verbindungsleitung 8 und einer Leitung für das Exportgas im Bereich nach der Strahlpumpe 7 vorgesehen sein, die z.B. beim Anfahren der Schmelzreduktions-Anlage abgesperrt wird, wodurch sich beim Anfahren ein niedrigerer Druck des Exportgases 12 ergibt; im Normalbetrieb ist diese Leitung jedoch abgesperrt. Das Erzeugen des Desorptionsdrucks durch das Durchströmen der Strahlpumpe 7 mit Treibgas hat folgende Vorteile: Wartungsfreiheit der Strahlpumpe, insbesondere keine bewegten Teile, geringerer Platzbedarf und geringere Anschaffungskosten verglichen mit einem Kompressor und außerdem keine Energiekosten. Ein weiterer Vorteil besteht darin, dass das Offgas bzw. Topgas bzw. Überschussgas bei einer Anlage nach dem Stand der Technik ohnehin auf den Umgebungsdruck gedrosselt werden muss. Beim erfindungsgemäßen Verfahren wird die Druckenergie des Abgases dazu verwendet, den Desorptionsdruck zu erzeugen und steht als Exportgas 12 zur Verfügung.

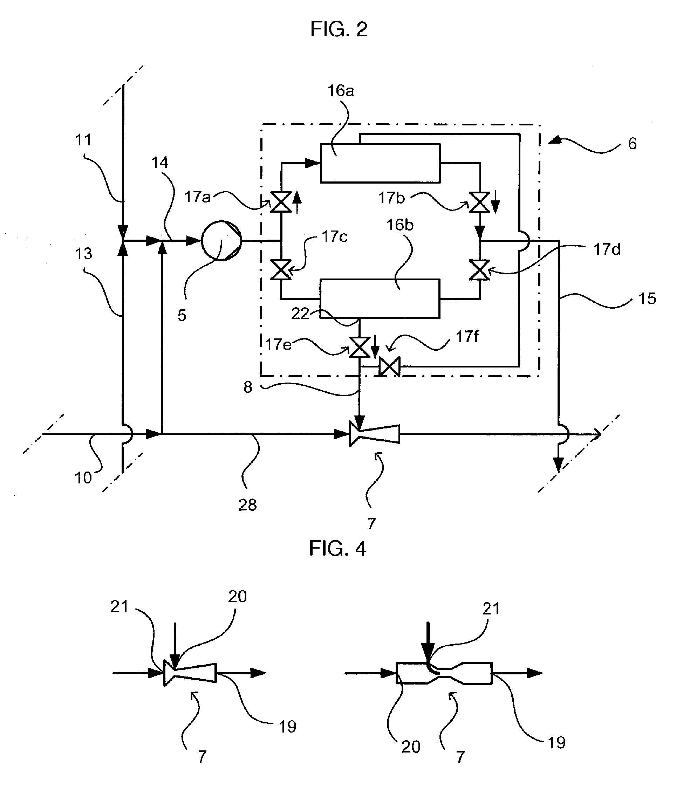

Fig. 2 zeigt eine Ausführungsform der Druckwechsel-Adsorptionsanlage 6 mit zwei Adsorptionsabscheidern 16a und 16b. Ein der Druckwechsel-Adsorptionsanlage 6 zugeführtes Abgas 14 setzt sich, so wie in Fig. 1, aus einer Teilmenge von Offgas 10, Überschussgas 11 und Topgas 13 zusammen. Wie gezeichnet, sind die Ventile 17a und 17b geöffnet und das Ventil 17f ist geschlossen, dh. der Adsorptionsabscheider 16a befindet sich in einer Adsorptionsphase und scheidet CO₂ und/oder H₂O aus dem komprimierten Abgas 14 ab. Ein so gereinigtes Abgas 15 kann - wie in Fig. 1 gezeichnet - mit einem Reduktionsgas vermischt bzw. als Reduktionsgas gegebenenfalls nach einer Aufheizung verwendet werden. Die Ventile 17c und 17d sind geschlossen und das Ventil 17e ist geöffnet, dh. der Adsorptionsabscheider 16b befindet sich in einer Desorptionsphase. Die Erzeugung des Desorptionsdrucks erfolgt mittels einer Strahlpumpe 7, die von einem Treibgas 28 (einem Teilstrom des Offgases 10) durchströmt wird. Nach dem Durchströmen der Strahlpumpe 7 steht das Offgas 10 und ein durch eine Verbindungsleitung 8 gewonnenes Tailgas als Exportgas zur Verfügung. Wenn das Aufnahmevermögen eines Adsorptionsmittels im Adsorptionsabscheider 16a weitgehend erschöpft ist und/oder der Adsorptionsabscheider 16b weitgehend desorbiert worden ist, werden die Ventile 17a, 17b und 17e geschlossen und die Ventile 17c, 17d und 17f geöffnet. Das Öffnen bzw. Schließen der Ventile kann schnell bzw. diskret, oder aber auch langsam bzw. kontinuierlich erfolgen. Durch das Umschalten der Ventile wird der Adsorptionsabscheider 16a in die Desorptionsphase und der Adsorptionsabscheider 16b in die Adsorptionsphase gebracht. In der Zeichnung sind Schnittstellen zu anderen Anlagenteilen durch strichpunktierte Linien dargestellt.

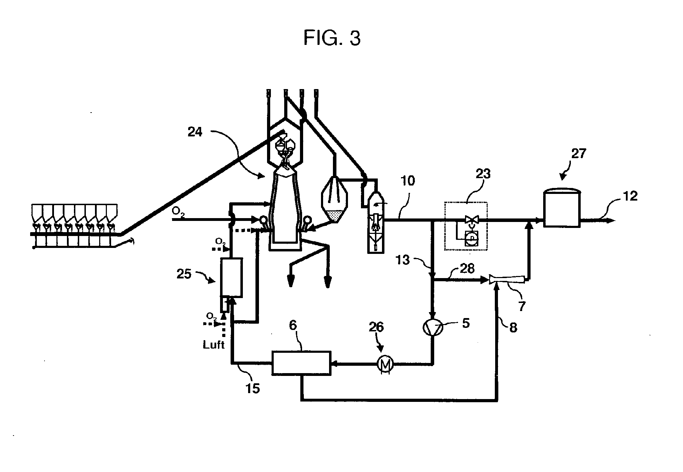

Fig. 3 zeigt eine Darstellung eines Hochofens 24 zur Herstellung von Roheisen mit einer Druckwechsel-Adsorptionsanlage 6. Das Roheisen wird im Hochofen 24 unter Zugabe von sauerstoffhältigem Gas (bevorzugt > 80 % O₂) und unter Beschickung von Koks und Erz hergestellt. Eine Teilmenge eines Abgases 10 des Hochofens 24, ein sogenannte Topgas 13, wird vor einem Druckregler 23 abgezweigt und nach einer Druckerhöhung mittels eines Kompressors 5 und einer Abkühlung in einem Gaskühler 26 der Druckwechsel-Adsorptionsanlage 6 unter einem ersten Druck p₁ zugeführt. Eine Teilmenge des Topgases 13 wird als Treibgas 28 einer Strahlpumpe 7 unter einem dritten Druck p₃ zugeführt, welche den zweiten Druck p₂ bzw. den Desorptionsdruck für das Entfernen von CO₂ und/oder H₂O aus einem Adsorptionsabscheider der Druckwechsel-Adsorptionsanlage 6 erzeugt. Hierbei gilt wiederum, dass p₂<p₁ und p₂<p₃. Die Druckwechsel-Adsorptionsablage 6 scheidet aus dem Abgas CO₂ und/oder H₂O ab, sodass ein gereinigtes Abgas 15 eine höheres Reduktionspotential und einen höheren Brennwert aufweist. Dieses Gas wird nach einer optionalen Vorwärmung einem Reduktionsgasofen 25 und dem Hochofen 24 zugeführt, z.B. über die Windformen bzw. Sauerstoffdüsen oder in den Schacht des Hochofens oberhalb einer kohäsiven Zone. Ein Exportgas 12, bestehend aus dem Treibgas 28, dem Tailgas in der Verbindungsleitung 8 und dem verbleibenden Abgas, wird in einem Gasspeicher 27 zwischengespeichert, von wo es einer thermischen Verwertung zugeführt wird. Bezüglich der Details der Druckwechsel-Adsorptionsanlage 6 wird auf die Fig. 2 verwiesen. Das Erzeugen des Desorptionsdrucks durch das Durchströmen der Strahlpumpe 7 mit Treibgas 28 hat wiederum folgende Vorteile: Wartungsfreiheit der Strahlpumpe, insbesondere keine bewegten Teile, geringerer Platzbedarf und geringere Anschaffungskosten verglichen mit einem Kompressor und außerdem keine Energiekosten.

Fig. 4 zeigt zwei schematische Darstellungen von Strahlpumpen. Die linke Darstellung zeigt eine Strahlpumpe 7, wobei der Treibgasanschluss 21 und der Druckanschluss 19 in einer Achse liegen. Der Sauganschluss 20 ist im rechten Winkel zur Achse Treibgasanschluss-Druckanschluss angeordnet. Bei der rechten Darstellung liegt der Sauganschluss 20 und der Druckanschluss 19 in einer Achse, der Treibgasanschluss 21 ist im rechten Winkel zu dieser Achse angeordnet. Für beide Darstellungen gilt, dass der Sauganschluss 20 mit dem Bereich des engsten Strömungsquerschnitts der Strahlpumpe in Verbindung steht und dass der Treibgasanschluss 21 mit einem Treibgas unter einem Druck p₃ beaufschlagt wird, wodurch sich im Sauganschluss 20 ein Druck p₂ einstellt, für den gilt p₂ < p₃.

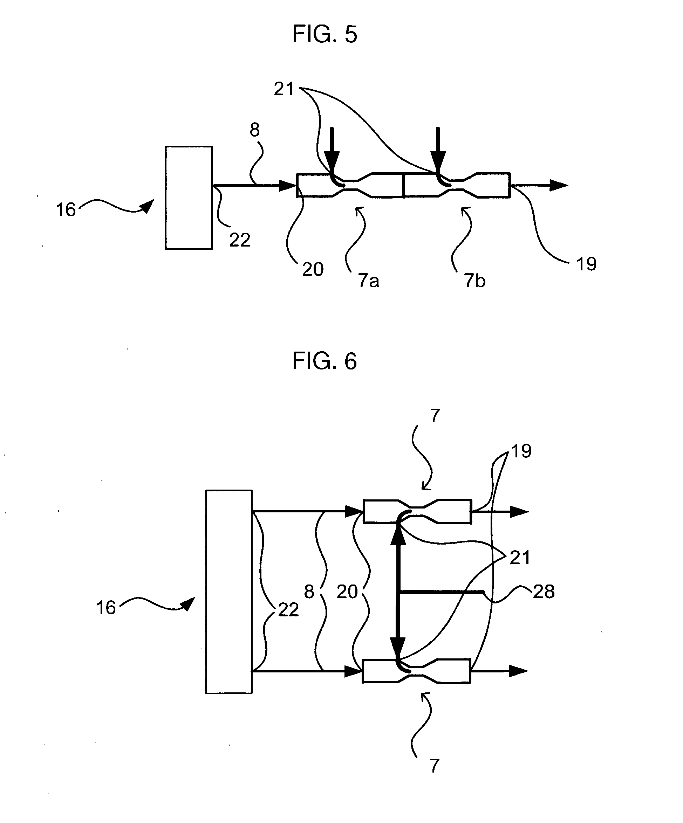

Fig. 5 zeigt eine schematische Darstellung einer Serienschaltung zweier Strahlpumpen 7a und 7b. Eine Verbindungsleitung 8 für Tailgas verbindet einen Sauganschluss 20 der Strahlpumpe 7a mit einem Desorptionsanschluss 22 eines Adsorptionsabscheiders 16. Der Druckanschluss der Saugpumpe 7a ist mit dem Sauganschluss der Saugpumpe 7b verbunden, wodurch ein besonders niedriger Desorptionsdruck erzielt werden kann. Beide Strahlpumpen 7a und 7b werden mittels eines Treibgasanschlusses 21 mit Treibgas versorgt.

In Fig. 6 zeigt eine schematische Darstellung einer Parallelschaltung zweier Strahlpumpen 7. Zwei Verbindungsleitungen 8 für Tailgas verbinden jeweils einen Sauganschluss 20 der beiden Strahlpumpen 7 mit einem Desorptionsanschluss 22 eines Adsorptionsabscheiders 16. Beide Strahlpumpen 7 werden mittels deren Treibgasanschlüsse 21 mit Treibgas versorgt, wodurch das Treibgas 28 auf zwei kleinere Saugpumpen verteilt wird. Zudem ist eine einfachere Stellung (Steuerung oder Regelung) des Desorptionsdrucks durch Veränderung einer Treibgasmenge möglich.

Das erfindungsgemäße Verfahren bzw. die Verwendung der erfindungsgemäßen Vorrichtung ist keinesfalls auf FINEX® Anlagen (Fig. 1) oder Hochöfen (Fig. 3) beschränkt; vielmehr ist auch die Anwendung bei Erdgas-Direktreduktionsanlagen (z.B. vom Typ HYL® oder FINMET®), COREX® Anlagen aber auch Direktreduktions-Kombinationsanlagen vorteilhaft.

### Bezugszeichenliste

- 1: Einschmelzvergaser
- 2: Reduktionsreaktor
- 3: Kaskade von Vorreduktionsreaktoren
- 4: Gaswäscher
- 5: Kompressor
- 6: Druckwechsel-Adsorptionsanlage
- 7: Strahlpumpe
- 8: Verbindungsleitung
- 9: Reduktionsgas
- 10: Offgas
- 11: Überschussgas
- 12: Exportgas
- 13: Topgas
- 14: Abgas
- 15: Gereinigtes Abgas
- 16: Adsorptionsabscheider
- 17: Ventil
- 18: Kühlgas
- 19: Druckanschluss
- 20: Sauganschluss
- 21: Treibgasanschluss
- 22: Desorptionsanschluss
- 23: Druckregler
- 24: Hochofen
- 25: Reduktionsgasofen
- 26: Gaskühler
- 27: Gasspeicher
- 28: Treibgas

## Patentansprüche

1. Verfahren zum Abscheiden mindestens eines gasförmigen Bestandteils aus einem Abgas einer Anlage zur Herstellung von flüssigem Roheisen, flüssigen Stahl-Vorprodukten oder Eisenschwamm, wobei in einem ersten Schritt ein Strom des Abgases unter einem ersten Druck mindestens einen Adsorptionsabscheider durchläuft, wodurch der gasförmige Bestandteil aus dem Abgas überwiegend abgeschieden wird und in einem zweiten Schritt der gasförmige Bestandteil unter einem zweiten Druck, der niedriger ist als der erste Druck, aus dem Adsorptionsabscheider überwiegend entfernt wird, **dadurch gekennzeichnet,**
**dass** der zweite Druck durch zumindest eine Strahlpumpe erzeugt wird, der ein Strom eines Treibgases unter einem dritten Druck, der höher ist als der zweite Druck, zugeführt wird;
**dass** als Treibgas entweder ein Topgas, ein Offgas, ein Überschussgas oder eine Mischung aus mindestens zwei dieser Gase verwendet wird;
**dass** als Abgas entweder ein Topgas, ein Offgas, ein Überschussgas oder eine Mischung aus mindestens zwei dieser Gase verwendet wird; und
**dass** der zweite Druck mittels einer Messeinrichtung erfasst und einem Regler zugeführt wird, der Regler unter Zuhilfenahme eines Regelgesetzes und unter Berücksichtigung eines Sollwertes eine Stellgröße ermittelt und einem Regelorgan zuführt, wobei der Strom des Treibgases zur Strahlpumpe derart verändert wird, dass der Druck dem Sollwert möglichst entspricht.

2. Verfahren nach einem der vorhergehenden Ansprüche, **dadurch gekennzeichnet, dass** aus dem Abgas entweder Kohlendioxid (CO₂) und/oder Wasserdampf (H₂O) abgeschieden wird.

3. Verfahren nach einem der vorhergehenden Ansprüche, **dadurch gekennzeichnet, dass** im Adsorptionsabscheider ein Adsorptionsmittel aus Zeolith, aktiviertem Siliziumoxid, Silica Gel, aktiviertem Aluminiumoxid, Aktivkohle oder einer Mischung aus mindestens zwei dieser Stoffe verwendet wird.

4. Verfahren nach einem der vorhergehenden Ansprüche, **dadurch gekennzeichnet, dass** das Treibgas unter einem Druck von 0.5 bis 5 bar über Umgebungsdruck der Strahlpumpe zugeführt wird.

5. Verfahren nach einem der vorhergehenden Ansprüche, **dadurch gekennzeichnet, dass** das Treibgas mehreren, in einer Serienschaltung angeordneten, Strahlpumpen zugeführt wird, wodurch der gasförmige Bestandteil unter einem reduzierten zweiten Druck aus dem Adsorptionsabscheider entfernt wird.

6. Verfahren nach einem der vorhergehenden Ansprüche, **dadurch gekennzeichnet, dass** das Treibgas mehreren, in einer Parallelschaltung angeordneten, Strahlpumpen zugeführt wird, wodurch der gasförmige Bestandteil unter einem reduzierten zweiten Druck aus dem Adsorptionsabscheider entfernt wird.

7. Verfahren nach einem der vorhergehenden Ansprüche, **dadurch gekennzeichnet, dass** der Adsorptionsabscheider in einer Adsorptionsphase mit dem ersten Druck beaufschlagt, der Druck im Adsorptionsabscheider mit einem oder mehreren Zwischendrücken vom ersten auf den zweiten Druck oder einen etwas über dem zweiten Druck gelegenen Druck abgesenkt, der Adsorptionsabscheider in einer Desorptionsphase mit dem zweiten Druck beaufschlagt und anschließend der Druck im Adsorptionsabscheider mit einem oder mehreren Zwischendrücken vom zweiten auf den ersten Druck erhöht wird.

8. Verfahren nach Anspruch 7, **dadurch gekennzeichnet, dass** der Druck im Adsorptionsabscheider kontinuierlich oder diskret verändert wird.

9. Anlage zur Herstellung von flüssigem Roheisen (24), flüssigen Stahl-Vorprodukten oder Eisenschwamm mit einer Vorrichtung zum Abscheiden mindestens eines gasförmigen Bestandteils aus einem Abgas (14), aufweisend wenigstens einen Adsorptionsabscheider (16) und zumindest eine Einrichtung zur Erzeugung eines Desorptionsdrucks, wobei die Einrichtung zur Erzeugung des Desorptionsdrucks als eine Strahlpumpe (7) mit einer Verbindungsleitung (8) zwischen einem Desorptionsanschluss (22) des Adsorptionsabscheiders (16) und einem Sauganschluss (20) der Strahlpumpe (7) ausgeführt ist, **dadurch gekennzeichnet,**
**dass** ein Treibgasanschluss (21) der Strahlpumpe (7) mit einer Leitung für ein Topgas, ein Offgas, ein Überschussgas oder einer Mischung aus mindestens zwei dieser Gase der Anlage zur Herstellung von flüssigem Roheisen (24), flüssigem Stahl-Vorprodukten oder Eisenschwamm verbunden ist;
**dass** der Adsorptionsabscheider (16) mit einer Abgasleitung (10,14) der Anlage zur Herstellung von flüssigem Roheisen (24), flüssigen Stahl-Vorprodukten oder Eisenschwamm verbunden ist; und
**dass** die Vorrichtung zusätzlich eine Messeinrichtung zur Erfassung eines Desorptionsdrucks, eine Regeleinrichtung (23) und ein Regelorgan (17) in einer Treibgasleitung der Strahlpumpe (7) aufweist.

10. Anlage mit Vorrichtung nach Anspruch 9, **dadurch gekennzeichnet, dass** mehrere Strahlpumpen (7) in einer Serienschaltung angeordnet sind, jeweils ein Druckanschluss (19) einer vorgeordneten Strahlpumpe (7) mit einem Sauganschluss (20) einer nachgeordneten Strahlpumpe (7) verbunden ist und alle Treibgasanschlüsse (21) mit einer Leitung für ein Topgas, ein Offgas, ein Überschussgas oder einer Mischung aus mindestens zwei dieser Gase der Anlage zur Herstellung von flüssigem Roheisen (24), flüssigem Stahl-Vorprodukten oder Eisenschwamm verbunden sind.

11. Anlage mit Vorrichtung nach Anspruch 9, **dadurch gekennzeichnet, dass** mehrere Strahlpumpen (7) in einer Parallelschaltung angeordnet sind, alle Sauganschlüsse (20) mit dem Desorptionsanschluss (22) des Adsorptionsabscheiders (16) und alle Treibgasanschlüsse (21) mit einer Leitung für ein Topgas, ein Offgas, ein Überschussgas oder einer Mischung aus mindestens zwei dieser Gase der Anlage zur Herstellung von flüssigem Roheisen (24), flüssigem Stahl-Vorprodukten oder Eisenschwamm verbunden sind.

12. Anlage mit Vorrichtung nach einem der Ansprüche 10 oder 11, **dadurch gekennzeichnet, dass** die Vorrichtung eine Kombination von Serien- und Parallelschaltungen von Strahlpumpen aufweist.

## Claims

1. Method for separating at least one gaseous component from a waste gas of an installation for producing liquid pig iron, liquid primary steel products or sponge iron, wherein, in a first step, a stream of the waste gas passes through at least one adsorption separator at a first pressure, whereby the gaseous component is largely separated from the waste gas and, in a second step, the gaseous component is largely removed from the adsorption separator at a second pressure, which is lower than the first pressure, **characterized**
**in that** the second pressure is generated by at least one jet pump, which is fed a stream of a propellant gas at a third pressure, which is higher than the second pressure,
**in that** either a top gas, an offgas, a surplus gas or a mixture of at least two of these gases is used as the propellant gas,
**in that** either a top gas, an offgas, a surplus gas or a mixture of at least two of these gases is used as the waste gas, and
**in that** the second pressure is detected by means of a measuring device and fed to a controller, with the aid of a set of rules, and with allowance for a setpoint value, the controller determines a manipulated variable and feeds it to a control element, wherein the stream of propellant gas to the jet pump is changed in such a way that the pressure corresponds as far as possible to the setpoint value.

2. Method according to Claim 1, **characterized in that** either carbon dioxide (CO₂) and/or water vapor (H₂O) is separated from the waste gas.

3. Method according to one of the preceding claims, **characterized in that** an adsorption agent of zeolite, activated silica, silica gel, activated alumina, activated charcoal or a mixture of at least two of these substances is used in the adsorption separator.

4. Method according to one of the preceding claims, **characterized in that** the propellant gas is fed to the jet pump at a pressure of 0.5 to 5 bar above ambient pressure.

5. Method according to one of the preceding claims, **characterized in that** the propellant gas is fed to a number of jet pumps, set up in a series arrangement, whereby the gaseous component is removed from the adsorption separator at a reduced second pressure.

6. Method according to one of the preceding claims, **characterized in that** the propellant gas is fed to a number of jet pumps set up in a parallel arrangement, whereby the gaseous component is removed from the adsorption separator at a reduced second pressure.

7. Method according to one of the preceding claims, **characterized in that** the first pressure is applied to the adsorption separator in an adsorption phase, the pressure in the adsorption separator is lowered from the first pressure to the second pressure, or to a pressure which lies somewhat above the second pressure, with one or more intermediate pressures, the second pressure is applied to the adsorption separator in a desorption phase and subsequently the pressure in the adsorption separator is increased from the second pressure to the first pressure with one or more intermediate pressures.

8. Method according to Claim 7, **characterized in that** the pressure in the adsorption separator is changed continuously or discretely.

9. Installation for producing liquid pig iron (24), liquid primary steel products or sponge iron with an apparatus for separating at least one gaseous component from a waste gas (14), having at least one adsorption separator (16) and at least one device for generating a desorption pressure, wherein the device for generating the desorption pressure is configured as a jet pump (7) with a connecting line (8) between a desorption connection (22) of the adsorption separator (16) and a suction connection (20) of the jet pump (7), **characterized in that** a propellant gas connection (21) of the jet pump (7) is connected to a line for a top gas, an offgas, a surplus gas or a mixture of at least two of these gases of the installation for producing liquid pig iron (24), liquid primary steel products or sponge iron;
**in that** the adsorption separator (16) is connected to a waste gas line (10, 14) of the installation for producing liquid pig iron (24), liquid primary steel products or sponge iron; and
**in that** the apparatus additionally has a measuring device for detecting a desorption pressure, a control device (23) and a control element (17) in a propellant gas line of the jet pump (7).

10. Installation with an apparatus according to Claim 9, **characterized in that** a number of jet pumps (7) are set up in a series arrangement, a pressure connection (19) of an upstream jet pump (7) is respectively connected to a suction connection (20) of a downstream jet pump (7) and all the propellant gas connections (21) are connected to a line for a top gas, an offgas, a surplus gas or a mixture of at least two of these gases of the installation for producing liquid pig iron (24), liquid primary steel products or sponge iron.

11. Installation with an apparatus according to Claim 9, **characterized in that** a number of jet pumps (7) are set up in a parallel arrangement, all the suction connections (20) are connected to the desorption connection (22) of the adsorption separator (16) and all the propellant gas connections (21) are connected to a line for a top gas, an offgas, a surplus gas or a mixture of at least two of these gases of the installation for producing liquid pig iron (24), liquid primary steel products or sponge iron.

12. Installation with an apparatus according to either of Claims 10 and 11, **characterized in that** the apparatus has a combination of series and parallel arrangements of jet pumps.

## Revendications

1. Procédé de séparation d'au moins un constituant gazeux contenu dans des fumées d'une installation pour la production de fonte liquide, de demi-produits en acier liquide ou d'éponge de fer, selon lequel, dans une première étape, un flux desdites fumées passe dans au moins un séparateur par adsorption sous une première pression, permettant ainsi de séparer en majeure partie le constituant gazeux des fumées, et, dans une deuxième étape, le constituant gazeux est en majeure partie éliminé du séparateur par adsorption sous une deuxième pression qui est inférieure à la première pression,
**caractérisé**
**en ce que** la deuxième pression est produite par au moins une pompe à jet à laquelle est amené un flux de gaz propulseur sous une troisième pression qui est supérieure à la deuxième pression ;
**en ce que** l'on utilise comme gaz propulseur un gaz de gueulard, un gaz de rejet, un gaz excédentaire ou un mélange d'au moins deux de ces gaz ;
**en ce que** l'on utilise comme fumée, un gaz de gueulard, un gaz de rejet, un gaz excédentaire ou un mélange d'au moins deux de ces gaz ; et
**en ce que** la deuxième pression est déterminée au moyen d'un dispositif de mesure et amenée à un régulateur, le régulateur, à l'aide d'une loi de régulation et en tenant compte d'une valeur de consigne, détermine une grandeur de réglage et amène celle-ci à un organe de réglage, le flux de gaz propulseur en direction de la pompe à jet étant modifié de manière que la pression corresponde autant que possible à la valeur de consigne.

2. Procédé selon l'une des revendications précédentes, **caractérisé en ce que** l'on sépare des fumées du dioxyde de carbone (CO₂) et/ou de la vapeur d'eau (H₂O).

3. Procédé selon l'une des revendications précédentes, **caractérisé en ce que** l'on utilise dans le séparateur par adsorption un adsorbant composé de zéolithe, de silice activée, de gel de silice, d'alumine activée, de charbon actif ou d'un mélange d'au moins deux de ces substances.

4. Procédé selon l'une des revendications précédentes, **caractérisé en ce que** le gaz propulseur est amené à la pompe à jet sous une pression de 0.5 à 5 bars au-dessus de la pression ambiante.

5. Procédé selon l'une des revendications précédentes, **caractérisé en ce que** le gaz propulseur est amené à plusieurs pompes à jet agencées dans un montage en série, permettant ainsi d'éliminer le constituant gazeux du séparateur par adsorption sous une deuxième pression réduite.

6. Procédé selon l'une des revendications précédentes, **caractérisé en ce que** le gaz propulseur est amené à plusieurs pompes à jet agencées dans un montage en parallèle, permettant ainsi d'éliminer le constituant gazeux du séparateur par adsorption sous une deuxième pression réduite.

7. Procédé selon l'une des revendications précédentes, **caractérisé en ce que** le séparateur par adsorption, au cours d'une phase d'adsorption, se voit appliquer la première pression, la pression dans le séparateur par adsorption est abaissée par une ou plusieurs pressions intermédiaires de la première à la deuxième pression ou à une pression située légèrement au-dessus de la deuxième pression, le séparateur par adsorption, au cours d'une phase de désorption, se voit appliquer la deuxième pression puis la pression dans le séparateur par adsorption est augmentée par une ou plusieurs pressions intermédiaires de la deuxième à la première pression.

8. Procédé selon la revendication 7, **caractérisé en ce que** la pression dans le séparateur par adsorption est modifiée de façon continue ou discrète.

9. Installation pour la production de fonte liquide (24), de demi-produits en acier liquide ou d'éponge de fer comprenant un dispositif de séparation d'au moins un constituant gazeux contenu dans des fumées (14), lequel dispositif comprend au moins un séparateur par adsorption (16) et au moins un moyen pour produire une pression de désorption, le moyen pour produire la pression de désorption étant réalisé sous la forme d'une pompe à jet (7) présentant une conduite de liaison (8) entre un raccord de désorption (22) du séparateur par adsorption (16) et un raccord d'aspiration (20) de la pompe à jet (7), **caractérisée**
**en ce qu**'un raccord de gaz propulseur (21) de la pompe à jet (7) est relié à une conduite pour un gaz de gueulard, un gaz de rejet, un gaz excédentaire ou un mélange d'au moins deux de ces gaz de l'installation pour la production de fonte liquide (24), de demi-produits en acier liquide ou d'éponge de fer ;
**en ce que** le séparateur par adsorption (16) est relié à une conduite d'évacuation des fumées (10, 14) de l'installation pour la production de fonte liquide (24), de demi-produits en acier liquide ou d'éponge de fer ; et
**en ce que** le dispositif comprend en outre un dispositif de mesure pour déterminer une pression de désorption, un régulateur (23) et un organe de réglage (17) dans une conduite de gaz propulseur de la pompe à jet (7).

10. Installation y compris dispositif selon la revendication 9, **caractérisée en ce que** plusieurs pompes à jet (7) sont agencées dans un montage en série, chaque fois un raccord de refoulement (19) d'une pompe à jet (7) montée en amont est relié à un raccord d'aspiration (20) d'une pompe à jet (7) montée en aval et tous les raccords de gaz propulseur (21) sont reliés à une conduite pour un gaz de gueulard, un gaz de rejet, un gaz excédentaire ou un mélange d'au moins deux de ces gaz de l'installation pour la production de fonte liquide (24), de demi-produits en acier liquide ou d'éponge de fer.

11. Installation y compris dispositif selon la revendication 9, **caractérisée en ce que** plusieurs pompes à jet (7) sont agencées dans un montage en parallèle, tous les raccords d'aspiration (20) sont reliés au raccord de désorption (22) du séparateur par absorption (16) et tous les raccords de gaz propulseur (21) sont reliés à une conduite pour un gaz de gueulard, un gaz de rejet, un gaz excédentaire ou un mélange d'au moins deux de ces gaz de l'installation pour la production de fonte liquide (24), de demi-produits en acier liquide ou d'éponge de fer.

12. Installation y compris dispositif selon l'une des revendications 10 ou 11, **caractérisée en ce que** le dispositif comprend une combinaison de montages en série et en parallèle de pompes à jet.
